# EUROPEAN PATENT SPECIFICATION

(11) **EP 2 515 575 B1**
(45) Date of publication and mention of the grant of the patent: **13.05.2015**
(21) Application number: 10851024.9
(22) Date of filing: 24.12.2010
(51) Int. Cl.: H04W 28/00, H04W 4/20

(54) **METHOD AND DEVICE FOR SEARCHING PERSONAL NETWORK SERVICE**
VERFAHREN UND VORRICHTUNG ZUM SUCHEN EINES PERSÖNLICHEN NETZWERKDIENSTES
PROCÉDÉ ET DISPOSITIF DE RECHERCHE DE SERVICE DE RÉSEAU PERSONNEL

(30) Priority: 04.05.2010 CN 201010162951
(43) Date of publication of application: 24.10.2012
(73) Proprietor: ZTE Corporation, Shenzhen, Guangdong 518057 (CN)
(72) Inventor: CHEN, Jun, Shenzhen Guangdong 518057 (CN); YAO, Lizhe, Shenzhen Guangdong 518057 (CN); LU, Yan, Shenzhen Guangdong 518057 (CN)
(74) Representative: Tischner, Oliver
(86) International application number: PCT/CN2010/080272
(87) International publication number: WO 2011/137655

(56) References cited:
- EP-A1- 2 166 790
- CN-A- 1 858 741
- CN-A- 1 936 891
- CN-A- 101 216 829
- US-A1- 2006 026 147
- US-A1- 2008 222 142
- OPEN MOBILE ALLIANCE: "Converged Personal Network Service Requirements", OMA-RD-CPNS-V1_020091117-C, , no. Candidate Version 1.0 17 November 2009 (2009-11-17), pages 1-36, XP002643237, Retrieved from the Internet: URL:http://www.openmobilealliance.org/Tech nical/release_program/docs/CPNS/V1_0-20091 117-C/OMA-RD-CPNS-V1_0-20091117-C.pdf [retrieved on 2011-06-17]

## Description

### TECHNICAL FIELD

The disclosure relates to a service search technology of a Personal Network (PN), in particular to a method and a device for searching a personal network service.

### BACKGROUND

The Personal Network is a network formed by connecting Personal Network Equipments (PNEs) owned by a person, such as portable digital products, intelligent household appliances, mobile terminals and the like, so that these equipments are enabled to be connected to an external network through any equipment with network access; wherein these equipments which provide wireless or wired external network access are called as Personal Network Gateways (PN Gateways), and the PNE can access to the service and content provided by the external network through the PN Gateway or provide service and content to the external network.

When there is a need to use the service content of the external network, the PNE can select the service interested by a user after accessing to a service list provided by the external network and looking up such information as a service content brief introduction, a service information fee and the like. However, as far as immense amount of personal network services are considered, it is very inconvenient to look up the service list on each page of the PNE. The other way is that the PNE initiates a service corresponding to keyword search, for example, for the keyword search on the existing Internet, a server also possibly returns lots of service information but some information is not suitable for the PNE to use. It is because that the difference between the PNEs is great, and such difference is embodied in: operating system, display screen, keyboard, processing capability, file format and the like, which are not as normalized as a computer used by the user; consequently, by aiming at different PNEs, lots of service contents are required for content adaptation. However, while initiating a search, the user will not consider what format of content his PNE requires, and the keyword initiated by the user generally is only involved in the service content, for example, the user can initiate the search by inputting a name of a song or a name of a singer and wait for a returned search result, but lots of the search results are returned and are not always satisfied with a use requirement of the PNE. In this way, it is obviously difficult to select the suitable service content therefrom as there are lots of search results; furthermore, it is possible to find many contents that are inadaptable to the PNE.

It can be seen from the above that, when the PNE searches the service content in an immense number of personal network service contents currently, a search speed of the service content is not rapid enough and the search result is not exact enough.

US 2006/026147 A1 discloses a search engine recording an association between a filter applied to a search query and a data item selected by a user from said filtered portion of the corresponding search result listing, wherein each recorded association contributes to the weighting given by the search engine to application of said filter in a subsequent search for at least one keyword of said search query.

OPEN MOBILE ALLIANCE: "Converged Personal Network Service Requirements", OMA-RD-CPNS-V1_020091117-C, no. Candidate Version 1.0 17 November 2009, pages 1-36, Retrieved from the Internet: URL:http://www.openmobilealiiance.org/Technical/ release_program/docs/CPNSIV1_0-20091117-C/OMA-RD-CPNS-V1_0-20091117-C.pdf [retrieved on 2011-06-17] discloses the requirements for the Converged Personal Network Service-CPNS, wherein the CPNS Enabler enables CPNS entities in a personal network (PN) to consume services within that PN, services from and to other PNs, and services provided by service providers outside the PN.

US 2008/222142 A1 discloses a system for facilitating data searching over a network, the system comprising: a first component adapted to communicate with a user via a user device over the network; a second component adapted to receive a search request from the user via the user device over the network, process the search request by identifying at least one context related to the user based on information passed with the search request, and provide at least one search result in response to the search request; and a database adapted to store information including contextual information related to the user, wherein the second component selects contextual information from the database related to the at least one context to be provided in the at least one search result to the user.

EP 2166790 discloses a method for enabling Service configuration by a plurality of Personal Network Entities PNE connected to a Personal Network comprising a PN Application Server (AS) accessible via the IP Multimedia Subsystem domain, a primary PNE holding a subscription to control the Personal Network and a plurality of secondary PNE controlled by said primary PNE.

### SUMMARY

In view of the above problem, the main purpose of the disclosure is to provide a method and a device for searching a personal network service, so as to improve the search speed and search accuracy of the personal network service contents.

In order to realize the purpose, the technical solution of the disclosure is realized as follows.

The disclosure provides a method for searching a personal network service, and the method includes:
generating an auxiliary keyword according to a primary keyword used for searching a service content by a Personal Network Equipment (PNE) and configuration information of the PNE, and transmitting the auxiliary keyword generated and the primary keyword to a personal network server; and
searching the service content by the personal network server according to the auxiliary keyword and the primary keyword, and providing a search result to the PNE
wherein the generating an auxiliary keyword according to a primary keyword used for searching a service content by a PNE and configuration information of the PNE specifically includes:
   extracting configuration information corresponding to the PNE from configuration information corresponding to each equipment in a maintained Personal Network (PN), and generating a corresponding auxiliary keyword according to the configuration information extracted and the primary keyword used for searching the service content by the PNE.

The method may further include that:
obtaining the configuration information of the PNE when the PNE joins and registers to the PN; and updating the configuration information of the PNE during a networking process of the PNE.

The generating an auxiliary keyword according to a primary keyword used for searching a service content by a PNE and configuration information of the PNE may specifically include:
generating a corresponding auxiliary keyword according to the configuration information provided when the PNE transmits the primary keyword.

The configuration information of the PNE may include at least one of parameters:
capability information, state information, location information and service usage statistic information of the PNE, and user preference information.

The disclosure further provides a method for searching a personal network service, and the method includes:
obtaining a search result generated by performing a search by a personal network server according to a keyword used for searching a service content by a Personal Network Equipment (PNE); and
generating a filtering condition according to configuration information of the PNE, filtering the search result generated by the personal network server, and providing the search result filtered to the PNE,
wherein the generating a filtering condition according to configuration information of the PNE specifically includes:
   extracting configuration information corresponding to the PNE from configuration information corresponding to each equipment in a maintained PN, and generating a corresponding filtering condition according to the configuration information extracted.

The method may further include:
obtaining the configuration information of the PNE when the PNE joins and registers to the PN; and updating the configuration information of the PNE during a networking process of the PNE.

The generating a filtering condition according to configuration information of the PNE may specifically include:
generating a corresponding filtering condition according to the configuration information provided when the PNE transmits the keyword.

The configuration information of the PNE may include at least one of parameters:
capability information, state information, location information and service usage statistic information of the PNE, and user preference information.

The disclosure further provides a device for searching a personal network service, and the device includes: a keyword generation unit and a keyword transmission unit, wherein
the keyword generation unit is configured to generate an auxiliary keyword according to a primary keyword used for searching a service content by a PNE and configuration information of the PNE; and
the keyword transmission unit is configured to transmit the auxiliary keyword generated and the primary keyword to a personal network server,
wherein the device further includes: an equipment management unit configured to maintain configuration information corresponding to each equipment in a PN;
correspondingly, the keyword generation unit may be further configured to extract configuration information corresponding to the PNE from the equipment management unit, and generate a corresponding auxiliary keyword according to the configuration information extracted and the primary keyword used for searching the service content by the PNE.

The equipment management unit may be further configured to: when the PNE joins and registers to the PN, obtain the configuration information of the PNE; and update the configuration information of the PNE during a networking process of the PNE.

The keyword generation unit may be further configured to generate a corresponding auxiliary keyword according to the configuration information provided when the PNE transmits the primary keyword.

The configuration information of the PNE may include at least one of parameters:
capability information, state information, location information and service usage statistic information of the PNE, and user preference information.

The disclosure further provides a device for searching a personal network service, and the device includes: a search result filtering unit configured to generate, when obtaining a search result generated by performing a search by a personal network server according to a keyword used for searching a service content by a PNE, a filtering condition according to configuration information of the PNE, filter the search result generated by the personal network server, and provide the search result filtered to the PNE,
wherein the device further includes: an equipment management unit configured to maintain configuration information corresponding to each equipment in a PN;
correspondingly, the search result filtering unit may be further configured to: extract the configuration information corresponding to the PNE from the equipment management unit, and generate a corresponding filtering condition according to the configuration information extracted.

The equipment management unit may be further configured to: when the PNE joins and registers to the PN, obtain the configuration information of the PNE; and update the configuration information of the PNE during a networking process of the PNE.

The search result filtering unit may be further configured to generate a corresponding filtering condition according to the configuration information provided when the PNE transmits the keyword.

The configuration information of the PNE may include at least one of parameters:
capability information, state information, location information and service usage statistic information of the PNE, and user preference information.

By means of the method and device for searching the personal network service provided by the disclosure, the auxiliary keyword is generated according to the primary keyword used for searching the service content by the PNE and the configuration information of the PNE, and the auxiliary keyword generated and the primary keyword are transmitted to the personal network server; the personal network server searches the service content according to the primary keywords and the auxiliary keywords, and provides a search result to the PNE; or, a search result generated by performing a search by the personal network server according to the keyword used for searching the service content by the PNE is obtained, the filtering condition is generated according to the configuration information of the PNE, the search result generated by the PN server is filtered and the filtered search result is provided to the PNE. By means of the method, the PNE can rapidly and effectively search the service content interested by a user, so that the search speed and the search accuracy of the personal network service content are improved.

### BRIEF DESCRIPTION OF THE DRAWINGS

Fig. 1 shows a flowchart of a method for searching a personal network server in a first embodiment of the disclosure;
Fig. 2 shows a structural diagram of a system for searching a personal network service in a first embodiment of the disclosure;
Fig. 3 shows a flowchart of a method for searching a personal network service in a second embodiment of the disclosure; and
Fig. 4 shows a structural diagram of a system for searching a personal network service in a second embodiment of the disclosure.

### DETAILED DESCRIPTION

The disclosure will be further described in detail with reference to the accompanying drawings and specific embodiments hereinafter.

In order to realize that the PNE rapidly and effectively searches the service content so that the search speed and the search accuracy of the personal network service content are improved, the disclosure aims to perform a definition on the basis of the keyword provided by the PNE so as to reduce the useless search result.

Based on the idea of the disclosure, a method for searching a personal network service provided by the disclosure includes: generating an auxiliary keyword according to a primary keyword used for searching a service content by a PNE and configuration information of the PNE, and transmitting the auxiliary keyword generated and the primary keyword to a personal network server; and providing the PNE with a search result generated by performing a search of the service content by the personal network server according to the primary keyword and the auxiliary keyword. The configuration information of the PNE includes at least one of parameters: capability information, state information, location information and service usage statistic information of the PNE, user preference information and the like.

The disclosure further provides a device for realizing the method, which includes a keyword generation unit and a keyword transmission unit, wherein the keyword generation unit is configured to generate an auxiliary keyword according to a primary keyword used for searching a service content by a PNE and configuration information of the PNE; and the keyword transmission unit is configured to transmit the auxiliary keyword generated and the primary keyword to a personal network server. Preferably, the device is further configured to provide the PNE with a search result returned by performing a search of the service content by the personal network server according to the primary keyword and the auxiliary keyword.

It needs to be noted that, the device of the disclosure can be internally arranged in a PNE, a PN Gateway or a PN server; of course, the device can further serve as an equipment independent of the PNE, the PN Gateway and the personal network server.

In addition, the device can extract the configuration information corresponding to the PNE from configuration information corresponding to each equipment in a PN maintained by the device, and generate the corresponding auxiliary keyword according to the configuration information extracted and the primary keyword used for searching the service content by the PNE; of course, the device further can directly generate the corresponding auxiliary keyword to the configuration information provided when the PNE transmits the primary keyword.

Based on the idea of the disclosure, another method for searching a personal network service provided by the disclosure includes: obtaining a search result generated by performing a search by a personal network server according to a keyword used for searching a service content by a PNE; and generating a filtering condition according to configuration information of the PNE, filtering the search result generated by the personal network server, and providing the search result filtered to the PNE. Wherein, the configuration information of the PNE includes at least one of parameters: capability information, state information, location information and service usage statistic information of the PNE, user preference information and the like.

The disclosure further provides a device corresponding to the realizing method, and the device includes: a search result filtering unit configured to generate, when obtaining a search result generated by performing a search by a personal network server according to a keyword used for searching a service content by a PNE, a filtering condition according to configuration information of the PNE, filter the search result generated by the personal network server, and provide the search result filtered to the PNE.

It needs to be noted that, the device can be internally arranged in the PNE, the PN Gateway or the personal network server; of course, the device can further serve as an equipment independent of the PNE, the PN Gateway and the personal network server.

In addition, the device can extract configuration information corresponding to the PNE from configuration information corresponding to each equipment in a PN maintained by the device, generate the corresponding filtering condition according to the configuration information extracted; of course, the device further can generate the corresponding filtering condition according to the configuration information provided when the PNE transmits the keyword.

The above searching method based on the generation of the auxiliary keyword can be used in combination with the method based on the search result filtering; that is, two parts as follows are included: generating the auxiliary keyword according to the configuration information of the PNE and providing the auxiliary keyword to the personal network server for performing the search of the service content; and generating the filtering condition according to the configuration information of the PNE to filter the search result returned by the personal network server. The specific operations of the two parts are referred to the two methods provided in the disclosure respectively and here will not repeat them. The above various methods for searching the personal network service will further described in detail in combination with the specific embodiments hereinafter.

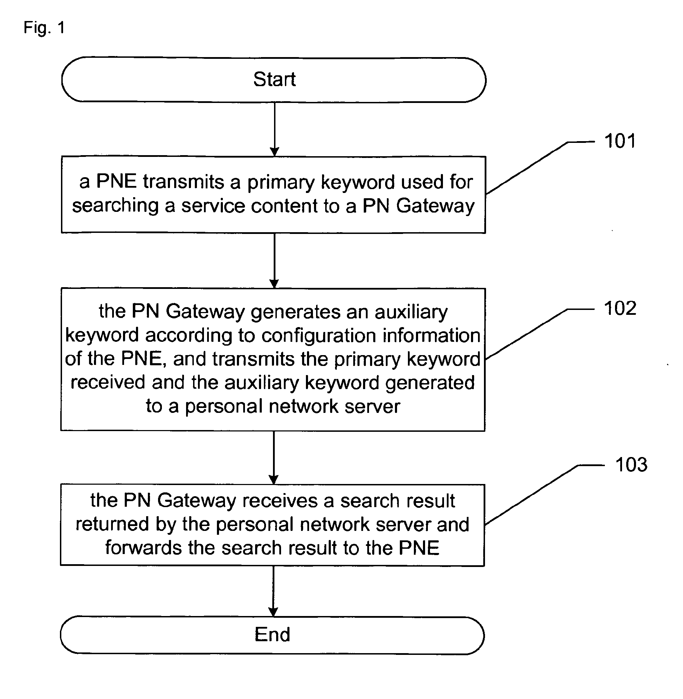

A method for searching a personal network service provided by a first embodiment of the disclosure as shown in Fig. 1 mainly includes the following steps.

Step 101, a PNE transmits a primary keyword used for searching a service content to a PN Gateway.

When needing to perform a search of a personal network service content, a user transmits the primary keyword used for searching the service content to the PN Gateway which the user is located at through the PNE. For example, when the user needs to search a song, the user can input the name of the song and the singer's name serving as the primary keyword on the PNE, and transmits the primary keyword to the PN Gateway.

Step 102, the PN Gateway generates an auxiliary keyword according to configuration information of the PNE, and transmits the primary keyword received and the auxiliary keyword generated to a personal network server.

When receiving the primary keyword for searching the service content transmitted by the PNE, the PN Gateway extracts the configuration information corresponding to the PNE from the configuration information corresponding to each equipment in the PN maintained by the PN Gateway, generates a corresponding auxiliary keyword according to the extracted configuration information, and transmits the primary keyword received and the auxiliary keyword generated to the personal network server.

It needs to be noted that, when the PNE will register while joining to the PN; and during the process, the PN Gateway can collect the configuration information of the PNE; during a networking process of the PNE, the state of the PNE will be changed; and during the process, the PN Gateway can collect the configuration information of the PNE updated. The PN Gateway stores the configuration information of each PNE collected. When the PNE needs to search the service content, the PN Gateway can fully make use of the information stored and extract relevant parameters to generate the auxiliary keyword. The auxiliary keyword limits the received keywords so that the rapid search can be realized and the searching accuracy can be improved.

For example, during a process of searching an audio and video, the auxiliary keyword of the video and audio format is added so that the searched content is more suitable for the PNE; when searching a game, the search of an on-line game or an off-line game can be limited according to the state statistic information of the PNE; when searching a restaurant place, the nearby restaurant places satisfying the user can be searched according to the geographic location information of the PNE and the flavor set according to the user preference; and when searching discount promotion information, the discount promotion type that is visited usually by the PNE is searched according to the historic service use statistic information of the PNE.

Step 103, the PN Gateway receives a search result returned by performing a search of the service content by the personal network server according to the primary keyword and the auxiliary keyword, and forwards the search result to the PNE.

For example, if the PNE only supports to play a music of a mp3 format, the PN Gateway will limit the mp3 format according to the parameter of the PNE when generating the auxiliary keyword, so that the service content searched by the personal network server will not include a song of the other format (such as wma); while downloading the video, the auxiliary keyword generated by the PN Gateway according to the capability parameter of the PNE will limit the resolution of the video, so that the personal network server will not search the content format beyond play capability of the PNE.

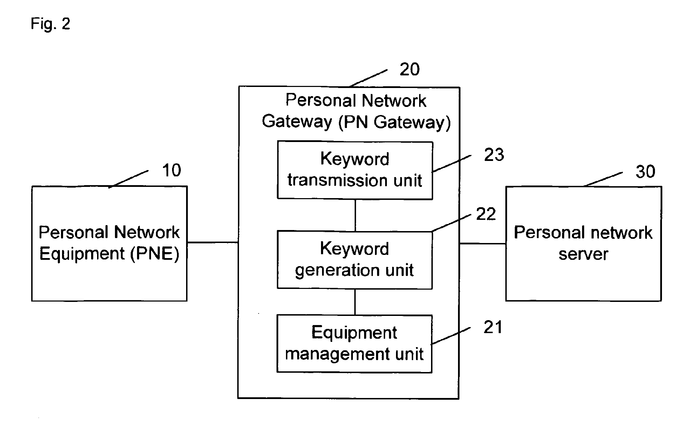

Corresponding to the method for searching the personal network service as shown in Fig. 1, the disclosure further provides a device for searching a personal network service, and the device can be arranged in the PN Gateway and be also used as the external equipment of the PN Gateway. The structure of the device can be referred to Fig. 2; Fig. 2 is a structural diagram of the system for searching the personal network service that is composed of a PNE 10, a PN Gateway 20 and a persona network server 30. The device for searching the personal network service according to the disclosure is arranged in the PN Gateway 20.

The device includes an equipment management unit 21, a keyword generation unit 22 and a keyword transmission unit 23. Wherein, the equipment management unit 21 is configured to maintain configuration information corresponding to each equipment in a PN; the keyword generation unit 22 is configured to extract configuration information corresponding to the PNE 10 from the equipment management unit 21 when receiving a primary keyword used for searching a service content transmitted by the PNE 10, and generate an auxiliary keyword according to the configuration information extracted; the keyword transmission unit 23 is configured to transmit the primary keyword received and the auxiliary keyword generated to the personal network server 30; the personal network server 30 is configured to return the search result to the PN Gateway 20 when obtaining a search result by searching the service content according to the primary keyword and the auxiliary keyword; and the PN Gateway 20 forwards the search result to the PNE 10.

Furthermore, the equipment management unit 21 is further configured to: obtain the configuration information of the PNE 10 when the PNE 10 joins and registers to the PN, and update the configuration information of the PNE 10 during a networking process of the PNE 10.

Also, in order to realize that the PNE rapidly and efficiently searches the personal network service, the method for searching the personal network service in a second embodiment of the disclosure mainly includes the following idea: a PNE sends a keyword to a PN Gateway; the PN Gateway forwards the keyword to a personal network server; the personal network server returns a search result to the PN Gateway; the PN Gateway generates a filtering condition according to configuration information of the PNE, filters the search result received by using the filtering condition and transmits the search result filtered to the PNE.

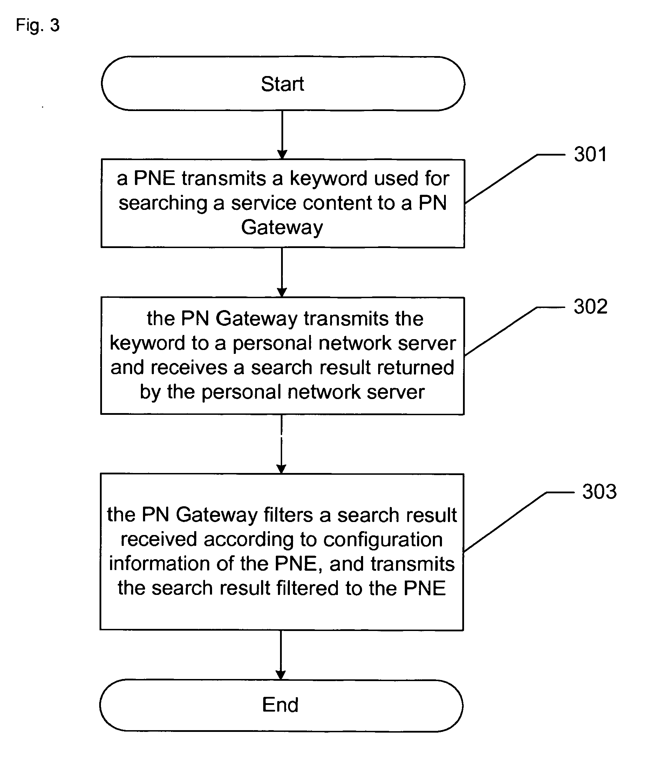

Based on the above idea, the method for searching the personal network service provided by the second embodiment of the disclosure as shown in Fig. 3 mainly includes the following steps.

Step 301, a PNE transmits a keyword used for searching a service content to a PN Gateway.

Step 302, the PN Gateway transmits the keyword to a personal network server and receives a search result returned by the personal network server.

Step 303, the PN Gateway generates a filtering condition according to configuration information of the PNE, filters the search result received and transmits the search result filtered to the PNE.

For example, if the PNE only supports to play the music of the mp3 format, the PN Gateway will limit the mp3 format according to the parameter of the PNE when generating the filtering condition, so that when filtering the search result returned by the personal network server, a song of other format (such as wma) will be filtered away, and thus only the songs of the mp3 format are remained in the search result filtered; while downloading the video, the filtering condition generated by the PN Gateway based on the capability parameter of the PNE will limit the resolution of the video, so that while filtering the search result returned by the personal network server, the resolution of the video is limited, and the content format beyond the play capability of the PNE does not exist in the search result filtered.

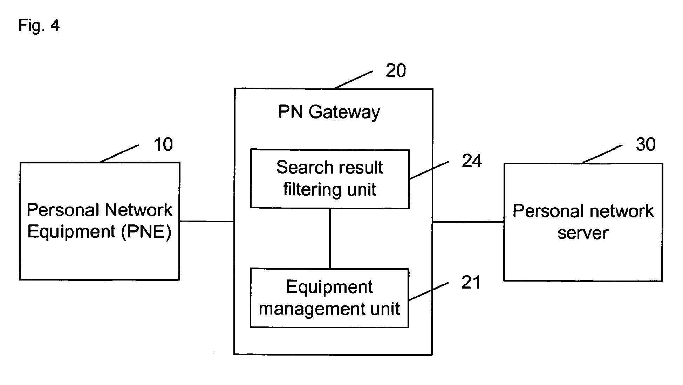

Corresponding to the method for searching the personal network service as shown in Fig. 3, the disclosure further provides a device for searching a personal network service; the device can be arranged in the PN Gateway and be also used as an external equipment of the PN Gateway. The structure of the device can be referred to Fig. 4; Fig. 4 is a structural diagram of the system for searching the personal network service that is composed of a PNE 10, a PN Gateway 20 and a persona network server 30. The device for searching the personal network service according to the disclosure is arranged in the PN Gateway 20, and is configured to forward the keyword used for searching the service content transmitted by the PNE to the personal network server and receive the search result returned by the personal network server.

The device includes an equipment management unit 21 and a search result filtering unit 24. Wherein, the equipment management unit 21 is configured to maintain configuration information corresponding to each equipment in the PN; and the search result filtering unit 24 is configured to extract configuration information corresponding to the PNE 10 from the equipment management unit 21, generate a filtering condition according to the configuration information extracted, filter a search result returned by the personal network server, and transmit the search result filtered to the PNE 10.

In addition, the equipment management unit 21 is further configured to obtain, when the PNE 10 joins and registers to the PN, the configuration information of the PNE 10, and update the configuration information of the PNE 10 during a networking process of the PNE 10.

In conclusion, by means of the disclosure, the PNE can rapidly and efficiently search the service content interested by the user through the PN Gateway, so that the search speed and search accuracy of the personal network service content are improved.

In addition, the searching method based on the generation of the auxiliary keyword as shown in Fig. 1 can be used in combination with the method based on the filtering of the search result as shown in Fig. 3; and in an embodiment of the combined use, the portion based on the generation of the auxiliary keyword can be referred to the flow as shown in Fig. 1, the portion based on the filtering of the search result can be referred to the flow as shown in Fig. 3, and here will not repeat them.

The above are only the preferred embodiments of the disclosure, but are not intended to limit the scope of protection of the disclosure.

## Claims

1. A method for searching a personal network service, that comprises:
generating (Step 102) an auxiliary keyword according to a primary keyword used for searching a service content by a Personal Network Equipment, PNE, and configuration information of the PNE, and transmitting the auxiliary keyword generated and the primary keyword to a personal network server; and
searching the service content by the personal network server according to the auxiliary keyword and the primary keyword, and providing a search result to the PNE,
wherein the generating an auxiliary keyword according to a primary keyword used for searching a service content by a PNE and configuration information of the PNE specifically comprises:
extracting configuration information corresponding to the PNE from configuration information corresponding to each equipment in a maintained Personal Network, PN, and generating a corresponding auxiliary keyword according to the configuration information extracted and the primary keyword used for searching the service content by the PNE.

2. The method for searching a personal network service according to claim 1, wherein the generating an auxiliary keyword according to a primary keyword used for searching a service content by a PNE and configuration information of the PNE specifically comprises:
generating a corresponding auxiliary keyword according to the configuration information provided when the PNE transmits the primary keyword.

3. The method for searching a personal network service according to any one of claims 1 to 2, wherein the configuration information of the PNE comprises at least one of parameters as follows:
capability information, state information, location information and service usage statistic information of the PNE, and user preference information.

4. A method for searching a personal network service, that comprises:
obtaining a search result generated by performing a search by a personal network server according to a keyword used for searching a service content by a Personal Network Equipment, PNE; and
generating a filtering condition according to configuration information of the PNE, filtering (Step 303) the search result generated by the personal network server, and providing the search result filtered to the PNE,
wherein the generating a filtering condition according to configuration information of the PNE specifically comprises:
extracting configuration information corresponding to the PNE from configuration information corresponding to each equipment in a maintained Personal Network, PN, and generating a corresponding filtering condition according to the configuration information extracted.

5. The method for searching a personal network service according to claim 4, wherein the generating a filtering condition according to configuration information of the PNE specifically comprises:
generating a corresponding filtering condition according to the configuration information provided when the PNE transmits the keyword.

6. The method for searching a personal network service according to any one of claims 4 to 5, wherein the configuration information of the PNE comprises at least one of parameters as follows:
capability information, state information, location information and service usage statistic information of the PNE, and user preference information.

7. A device for searching a personal network service, cpmprisina a keyword generation unit (22) and a keyword transmission unit (23), wherein:
the keyword generation unit (22) is configured to generate an auxiliary keyword according to a primary keyword used for searching a service content by a Personal Network Equipment, PNE, (10) and configuration information of the PNE (10); and
the keyword transmission unit (23) is configured to transmit the auxiliary keyword generated and the primary keyword to a personal network server (30),
wherein the device further comprises an equipment management unit (21) configured to maintain configuration information corresponding to each equipment in a Personal Network, PN;
correspondingly, the keyword generation unit (22) is further configured to extract configuration information corresponding to the PNE (10) from the equipment management unit (21), and generate a corresponding auxiliary keyword according to the configuration information extracted and the primary keyword used for searching the service content by the PNE (10).

8. The device for searching a personal network service according to claim 7, wherein the equipment management unit (21) is further configured to: when the PNE (10) joins and registers to the PN, obtain the configuration information of the PNE (10); and update the configuration information of the PNE (10) during a networking process of the PNE (10).

9. The device for searching a personal network service according to claim 7, wherein the keyword generation unit (22) is further configured to generate a corresponding auxiliary keyword according to the configuration information provided when the PNE (10) transmits the primary keyword.

10. The device for searching a personal network service according to any one of claims 7 to 9, wherein the configuration information of the PNE (10) comprises at least one of parameters as follows:
capability information, state information, location information and service usage statistic information of the PNE (10), and user preference information.

11. A device for searching a personal network service, wherein the device comprises a search result filtering unit (24) configured to generate, when obtaining a search result generated by performing a search by a personal network server (30) according to a keyword used for searching a service content by a Personal Network Equipment, PNE (10), a filtering condition according to configuration information of the PNE (10), filter the search result generated by the personal network server (30), and provide the search result filtered to the PNE (10),
wherein the device further comprises an equipment management unit (21) configured to maintain configuration information corresponding to each equipment in a Personal Network, PN;
correspondingly, the search result filtering unit (24) is further configured to extract the configuration information corresponding to the PNE (10) from the equipment management unit (21), and generate a corresponding filtering condition according to the configuration information extracted.

12. The device for searching a personal network service according to claim 11, wherein the equipment management unit (21) is further configured to: when the PNE (10) joins and registers to the PN, obtain the configuration information of the PNE (10); and update the configuration information of the PNE (10) during a networking process of the PNE (10).

13. The device for searching a personal network service according to claim 11, wherein the search result filtering unit (24) is further configured to generate a corresponding filtering condition according to the configuration information provided when the PNE (10) transmits the keyword.

14. The device for searching a personal network service according to any one of claims 11 to 13, wherein the configuration information of the PNE (10) comprises at least one of parameters as follows:
capability information, state information, location information and service usage statistic information of the PNE (10), and user preference information.

## Patentansprüche

1. Verfahren zum Durchsuchen eines persönlichen Netzwerkdienstes, das umfasst:
Generieren (Schritt 102) eines Zusatzschlüsselworts gemäß einem primären Schlüsselwort, das zum Durchsuchen eines Dienstinhalts durch eine persönliche Netzwerkeinrichtung PNE verwendet wird, und Konfigurationsinformationen der PNE und Übertragen des generierten Zusatzschlüsselworts und des primären Schlüsselworts an einen persönlichen Netzwerkserver; und
Durchsuchen des Dienstinhalts durch den persönlichen Netzwerkserver gemäß dem Zusatzschlüsselwort und dem primären Schlüsselwort und Bereitstellen eines Suchergebnisses an die PNE,
wobei das Generieren eines Zusatzschlüsselworts gemäß einem primären Schlüsselwort, das zum Durchsuchen eines Dienstinhalts durch eine PNE verwendet wird, und Konfigurationsinformationen der PNE insbesondere umfasst:
Extrahieren von Konfigurationsinformationen, die der PNE entsprechen, aus Konfigurationsinformationen, die jeder Einrichtung in einem bestehenden persönlichen Netzwerk PN entsprechen, und Generieren eines entsprechenden Zusatzschlüsselworts gemäß den extrahierten Konfigurationsinformationen und dem primären Schlüsselwort, das zum Durchsuchen des Dienstinhalts durch die PNE verwendet wird.

2. Verfahren zum Durchsuchen eines persönlichen Netzwerkdiensts nach Anspruch 1, wobei das Generieren eines Zusatzschlüsselworts gemäß einem primären Schlüsselwort, das zum Durchsuchen eines Dienstinhalts durch eine PNE verwendet wird, und Konfigurationsinformationen der PNE insbesondere umfasst:
Generieren eines entsprechenden Zusatzschlüsselworts gemäß den Konfigurationsinformationen, die bereitgestellt werden, wenn die PNE das primäre Schlüsselwort überträgt.

3. Verfahren zum Durchsuchen eines persönlichen Netzwerkdiensts nach einem der Ansprüche 1 bis 2, wobei die Konfigurationsinformationen der PNE zumindest einen der folgenden Parameter umfassen:
Funktionsinformationen, Statusinformation, Positionsinformationen und Dienstnutzungsstatistikinformationen der PNE sowie Benutzereinstellungsinformationen.

4. Verfahren zum Durchsuchen eines persönlichen Netzwerkdiensts, das umfasst:
Erhalten eines Suchergebnisses, das durch Durchführen einer Suche durch einen persönlichen Netzwerkserver gemäß einem Schlüsselwort generiert wurde, das zum Durchsuchen eines Dienstinhalts durch eine persönliche Netzwerkeinrichtung PNE verwendet wurde; und
Generieren einer Filterbedingung gemäß Konfigurationsinformationen der PNE, Filtern (Schritt 303) des vom persönlichen Netzwerkservers generierten Suchergebnisses und Bereitstellen des gefilterten Suchergebnisses an die PNE,
wobei das Generieren einer Filterbedingung gemäß Konfigurationsinformationen der PNE insbesondere umfasst:
Extrahieren von Konfigurationsinformationen, die der PNE entsprechen, aus Konfigurationsinformationen, die jeder Einrichtung in einem bestehenden persönlichen Netzwerk PN entsprechen, und Generieren einer entsprechenden Filterbedingung gemäß den extrahierten Konfigurationsinformationen.

5. Verfahren zum Durchsuchen eines persönlichen Netzwerkdiensts gemäß Anspruch 4, wobei das Generieren einer Filterbedingung gemäß Konfigurationsinformationen der PNE insbesondere umfasst:
Generieren einer entsprechenden Filterbedingung gemäß den Konfigurationsinformationen, die bereitgestellt werden, wenn die PNE das Schlüsselwort überträgt.

6. Verfahren zum Durchsuchen eines persönlichen Netzwerkdiensts nach einem der Ansprüche 4 bis 5, wobei die Konfigurationsinformationen der PNE zumindest einen der folgenden Parameter umfassen:
Funktionsinformationen, Statusinformation, Positionsinformationen und Dienstnutzungsstatistikinformationen der PNE sowie Benutzereinstellungsinformationen.

7. Vorrichtung zum Durchsuchen eines persönlichen Netzwerkdiensts, die eine Schlüsselwortgenerierungseinheit (22) und eine Schlüsselwortübertragungseinheit (23) umfasst, wobei
die Schlüsselgenerierungseinheit (22) so konfiguriert ist, dass sie ein Zusatzschlüsselwort gemäß einem primären Schlüsselwort, das verwendet wird, um einen Dienstinhalt durch eine persönliche Netzwerkeinrichtung PNE (10) zu durchsuchen, und Konfigurationsinformationen der PNE (10) generiert; und
die Schlüsselwortübertragungseinheit (23) so konfiguriert ist, dass sie das generierte Zusatzschlüsselwort und das primäre Schlüsselwort an einen persönlichen Netzwerkserver (30) überträgt,
wobei die Vorrichtung darüber hinaus eine Einrichtungsverwaltungseinheit (21) umfasst, die so konfiguriert ist, dass sie Konfigurationsinformationen, die jeder Einrichtung in einem persönlichen Netzwerk PN entsprechen, verwaltet;
dementsprechend ist die Schlüsselgenerierungseinheit (22) darüber hinaus so konfiguriert, dass sie Konfigurationsinformationen, die der PNE (10) entsprechen, aus der Einrichtungsverwaltungseinheit (21) extrahiert und ein entsprechendes Zusatzschlüsselwort gemäß den extrahierten Konfigurationsinformationen und dem primären Schlüsselwort generiert, das zum Durchsuchen des Dienstinhalts durch die PNE (10) verwendet wird.

8. Vorrichtung zum Durchsuchen eines persönlichen Netzwerkdiensts nach Anspruch 7, wobei die Einrichtungsverwaltungseinheit (21) darüber hinaus so konfiguriert ist, dass: sie, wenn die PNE (10) sich mit dem PN verbindet und sich bei diesem registriert, die Konfigurationsinformationen der PNE (10) erhält; und die Konfigurationsinformationen der PNE (10) während eines Vernetzungsprozesses der PNE (10) aktualisiert.

9. Vorrichtung zum Durchsuchen eines persönlichen Netzwerkdiensts nach Anspruch 7, wobei die Schlüsselwortgenerierungseinheit (22) darüber hinaus so konfiguriert ist, dass sie ein entsprechendes Zusatzschlüsselwort gemäß den Konfigurationsinformationen generiert, die bereitgestellt werden, wenn die PNE (10) das primäre Schlüsselwort überträgt.

10. Vorrichtung zum Durchsuchen eines persönlichen Netzwerkdiensts nach einem der Ansprüche 7 bis 9, wobei die Konfigurationsinformationen der PNE (10) zumindest einen der folgenden Parameter umfassen:
Funktionsinformationen, Statusinformation, Positionsinformationen und Dienstnutzungsstatistikinformationen der PNE (10) sowie Benutzereinstellungsinformationen.

11. Vorrichtung zum Durchsuchen eines persönlichen Netzwerkdiensts, wobei die Vorrichtung eine Suchergebnisfiltereinheit (24) umfasst, die so konfiguriert ist, dass sie bei Erhalt eines Suchergebnisses, das durch Durchführen einer Suche durch einen persönlichen Netzwerkserver (30) gemäß einem Schlüsselwort generiert wird, das zum Durchsuchen eines Dienstinhalts durch eine persönliche Netzwerkeinrichtung PNE (10) verwendet wird, eine Filterbedingung gemäß den Konfigurationsinformationen der PNE (10) erzeugt, das vom persönlichen Netzwerkserver (30) generierte Suchergebnis filtert und das gefilterte Suchergebnis an die PNE (10) bereitstellt,
wobei die Vorrichtung darüber hinaus eine Einrichtungsverwaltungseinheit (21) umfasst, die so konfiguriert ist, dass sie Konfigurationsinformationen, die jeder Einrichtung in einem persönlichen Netzwerk PN entsprechen, verwaltet;
dementsprechend ist die Schlüsselgenerierungseinheit (24) darüber hinaus so konfiguriert, dass sie Konfigurationsinformationen, die der PNE (10) entsprechen, aus der Einrichtungsverwaltungseinheit (21) extrahiert und eine entsprechende Filterbedingung gemäß den extrahierten Konfigurationsinformationen generiert.

12. Vorrichtung zum Durchsuchen eines persönlichen Netzwerkdiensts nach Anspruch 11, wobei die Einrichtungsverwaltungseinheit (21) darüber hinaus so konfiguriert ist, dass: sie, wenn die PNE (10) sich mit dem PN verbindet und sich bei diesem registriert, die Konfigurationsinformationen der PNE (10) erhält; und die Konfigurationsinformationen der PNE (10) während eines Vernetzungsprozesses der PNE (10) aktualisiert.

13. Vorrichtung zum Durchsuchen eines persönlichen Netzwerkdiensts nach Anspruch 11, wobei die Suchergebnisfiltereinheit (24) darüber hinaus so konfiguriert ist, dass sie eine entsprechende Filterbedingung gemäß den Konfigurationsinformationen generiert, die bereitgestellt werden, wenn die PNE (10) das Schlüsselwort überträgt.

14. Vorrichtung zum Durchsuchen eines persönlichen Netzwerkdiensts nach einem der Ansprüche 11 bis 13, wobei die Konfigurationsinformationen der PNE (10) zumindest einen der folgenden Parameter umfassen:
Funktionsinformationen, Statusinformation, Positionsinformationen und Dienstnutzungsstatistikinformationen der PNE (10) sowie Benutzereinstellungsinformationen.

## Revendications

1. Procédé de recherche d'un service de réseau personnel, lequel comprend les étapes ci-dessous consistant à :
générer (étape 102) un mot clé auxiliaire selon un mot clé principal utilisé en vue de rechercher un contenu de service, par le biais d'un équipement de réseau personnel, PNE, et des informations de configuration de l'équipement PNE, et transmettre le mot clé auxiliaire généré et le mot clé principal, à un serveur de réseau personnel ; et
rechercher le contenu de service, par le biais du serveur de réseau personnel, selon le mot clé auxiliaire et le mot clé principal, et fournir un résultat de recherche à l'équipement PNE ;
dans lequel la génération d'un mot clé auxiliaire selon un mot clé principal utilisé en vue de rechercher un contenu de service, par le biais d'un équipement PNE, et d'informations de configuration de l'équipement PNE comprend spécifiquement les étapes ci-dessous consistant à :
extraire des informations de configuration, correspondant à l'équipement PNE, des informations de configuration correspondant à chaque équipement dans un réseau personnel maintenu, PN, et générer un mot clé auxiliaire correspondant selon les informations de configuration extraites et le mot clé principal utilisé pour rechercher le contenu de service par le biais de l'équipement PNE.

2. Procédé de recherche d'un service de réseau personnel selon la revendication 1, dans lequel la génération d'un mot clé auxiliaire selon un mot clé principal utilisé en vue de rechercher un contenu de service par le biais d'un équipement PNE et d'informations de configuration de l'équipement PNE comporte spécifiquement l'étape ci-dessous consistant à :
générer un mot clé auxiliaire correspondant selon les informations de configuration fournies lorsque l'équipement PNE transmet le mot clé principal.

3. Procédé de recherche d'un service de réseau personnel selon l'une quelconque des revendications 1 à 2, dans lequel les informations de configuration de l'équipement PNE comportent au moins l'un des paramètres comme suit :
des informations de capacité, des informations d'état, des informations de localisation et des informations statistiques d'usage de services de l'équipement PNE, et des informations de préférences de l'utilisateur.

4. Procédé de recherche d'un service de réseau personnel, lequel comporte les étapes ci-dessous consistant à :
obtenir un résultat de recherche généré en mettant en oeuvre une recherche par le biais d'un serveur de réseau personnel selon un mot clé utilisé en vue de rechercher un contenu de service par le biais d'un équipement de réseau personnel, PNE ; et
générer une condition de filtrage selon des informations de configuration de l'équipement PNE, filtrer (étape 303) le résultat de recherche généré par le serveur de réseau personnel, et fournir le résultat de recherche filtré à l'équipement PNE ;
dans lequel la génération d'une condition de filtrage selon des informations de configuration de l'équipement PNE comporte spécifiquement les étapes ci-dessous consistant à :
extraire des informations de configuration, correspondant à l'équipement PNE, d'informations de configuration correspondant à chaque équipement dans un réseau personnel maintenu, PN, et générer une condition de filtrage correspondante selon les informations de configuration extraites.

5. Procédé de recherche d'un service de réseau personnel selon la revendication 4, dans lequel la génération d'une condition de filtrage selon des informations de configuration de l'équipement PNE comporte spécifiquement l'étape ci-dessous consistant à :
générer une condition de filtrage correspondante selon les informations de configuration fournies lorsque l'équipement PNE transmet le mot clé.

6. Procédé de recherche d'un service de réseau personnel selon l'une quelconque des revendications 4 à 5, dans lequel les informations de configuration de l'équipement PNE comportent au moins l'un des paramètres comme suit :
des informations de capacité, des informations d'état, des informations de localisation et des informations statistiques d'usage de services de l'équipement PNE, et des informations de préférences de l'utilisateur.

7. Dispositif destiné à rechercher un service de réseau personnel, comprenant une unité de génération de mots clés (22) et une unité de transmission de mots clés (23), dans lequel :
l'unité de génération de mots clés (22) est configurée de manière à générer un mot clé auxiliaire selon un mot clé principal utilisé en vue de rechercher un contenu de service par le biais d'un équipement de réseau personnel, PNE, (10) et des informations de configuration de l'équipement PNE (10) ; et
l'unité de transmission de mots clés (23) est configurée de manière à transmettre le mot clé auxiliaire généré et le mot clé principal à un serveur de réseau personnel (30) ;
dans lequel le dispositif comprend en outre une unité de gestion d'équipements (21) configurée de manière à maintenir des informations de configuration correspondant à chaque équipement dans un réseau personnel, PN ;
en conséquence, l'unité de génération de mots clés (22) est en outre configurée de manière à extraire des informations de configuration correspondant à l'équipement PNE (10) de l'unité de gestion d'équipements (21), et à générer un mot clé auxiliaire correspondant selon les informations de configuration extraites et le mot clé principal utilisé pour rechercher le contenu de service par le biais de l'équipement PNE (10).

8. Dispositif destiné à rechercher un service de réseau personnel selon la revendication 7, dans lequel l'unité de gestion d'équipements (21) est en outre configurée de manière à : lorsque l'équipement PNE (10) rejoint et s'enregistre auprès du réseau PN, obtenir les informations de configuration de l'équipement PNE (10) ; et mettre à jour les informations de configuration de l'équipement PNE (10) au cours d'un processus de réseautage de l'équipement PNE (10).

9. Dispositif destiné à rechercher un service de réseau personnel selon la revendication 7, dans lequel l'unité de génération de mots clés (22) est en outre configurée de manière à générer un mot clé auxiliaire correspondant selon les informations de configuration fournies lorsque l'équipement PNE (10) transmet le mot clé principal.

10. Dispositif destiné à rechercher un service de réseau personnel selon l'une quelconque des revendications 7 à 9, dans lequel les informations de configuration de l'équipement PNE (10) comportent au moins l'un des paramètres comme suit :
des informations de capacité, des informations d'état, des informations de localisation et des informations statistiques d'usage de services de l'équipement PNE (10), et des informations de préférences de l'utilisateur.

11. Dispositif destiné à rechercher un service de réseau personnel, dans lequel le dispositif comporte une unité de filtrage de résultats de recherche (24) configurée de manière à générer, lors de l'obtention d'un résultat de recherche généré en mettant en oeuvre une recherche par le biais d'un serveur de réseau personnel (30) selon un mot clé utilisé pour rechercher un contenu de service par le biais d'un équipement de réseau personnel, PNE, (10), une condition de filtrage selon des informations de configuration de l'équipement PNE (10), à filtrer le résultat de recherche généré par le serveur de réseau personnel (30), et à fournir le résultat de recherche filtré à l'équipement PNE (10) ;
dans lequel le dispositif comprend en outre une unité de gestion d'équipements (21) configurée de manière à maintenir des informations de configuration correspondant à chaque équipement dans un réseau personnel, PN ;
en conséquence, l'unité de filtrage de résultats de recherche (24) est en outre configurée de manière à extraire les informations de configuration, correspondant à l'équipement PNE (10), de l'unité de gestion d'équipements (21), et à générer une condition de filtrage correspondante selon les informations de configuration extraites.

12. Dispositif destiné à rechercher un service de réseau personnel selon la revendication 11, dans lequel l'unité de gestion d'équipements (21) est en outre configurée de manière à : lorsque l'équipement PNE (10) rejoint et s'enregistre auprès du réseau PN, obtenir les informations de configuration de l'équipement PNE (10) ; et mettre à jour les informations de configuration de l'équipement PNE (10) au cours d'un processus de réseautage de l'équipement PNE (10).

13. Dispositif destiné à rechercher un service de réseau personnel selon la revendication 11, dans lequel l'unité de filtrage de résultats de recherche (24) est en outre configurée de manière à générer une condition de filtrage correspondante selon les informations de configuration fournies lorsque l'équipement PNE (10) transmet le mot clé.

14. Dispositif destiné à rechercher un service de réseau personnel selon l'une quelconque des revendications 11 à 13, dans lequel les informations de configuration de l'équipement PNE (10) comportent au moins l'un des paramètres comme suit :
des informations de capacité, des informations d'état, des informations de localisation et des informations statistiques d'usage de services de l'équipement PNE (10), et des informations de préférences de l'utilisateur.
